Europäisches Patentamt

**European Patent Office**

**Office européen des brevets**

(19)

(11) Publication number: 0 066 311
A1

(12) # EUROPEAN PATENT APPLICATION

(21) Application number: 82200554.2

(22) Date of filing: 07.05.82

(51) Int. Cl.³: **C 04 B 41/02**
**B 44 C 1/26, E 04 F 15/08**

(30) Priority: 21.05.81 IT 4684581

(43) Date of publication of application:
08.12.82 Bulletin 82/49

(84) Designated Contracting States:
AT BE CH DE FR GB IT LI LU NL SE

(71) Applicant: Silingardi, Giuseppe
17, Via Pretorio
I-41049 Sassuolo Modena(IT)

(72) Inventor: Silingardi, Giuseppe
17, Via Pretorio
I-41049 Sassuolo Modena(IT)

(74) Representative: Corradini, Corrado
4, Via Sessi
I-42100 Reggio Emilia(IT)

(54) Partially glaze-decorated tile, with the decorations embedded therein.

(57) A tile of ceramic material harder than glaze, such as white sandstone or red sandstone, which comprises a surface decoration of coloured glaze completely and perfectly embedded in the body of the ceramic support so as to be perfectly coplanar therewith, the surface area of said embedded decoration being much less than the undecorated surface area of the support.

*Fig.2.*

EP 0 066 311 A1

- 1 -

PARTIALLY GLAZE-DECORATED TILE, WITH THE DECORATIONS EMBEDDED
THEREIN

Ceramic tiles of red or white sandstone or similar very hard
ceramic materials are widely used for constructing floors
subjected to heavy wear, such as in industrial workshops, in
laboratories or wherever the treading density is high.

The choice of white sandstone, red sandstone, or hard fired
clay or porcelain is due to the fact that these materials have
considerable hardness and thus wear resistance, and they are
also harder than the vitreous glaze with which normal tiles
are covered and decorated.

There is therefore the problem of decorating such a tile, this
representing a very difficult problem in that the application
of glaze reduces the natural wear resistance of this type of
tile.

Methods have been studied consisting of providing the exposed
upper surface of the tile with relief ribs which themselves
form a decoration, and completing this relief decoration by
applying coloured glaze to the depressed zones between one rib
and another.

These methods have however not solved the problem, in that the
depressed zones are subjected, even though to a lesser extent,
to wear which partly erases the glazed design, so compromising the general appearance.

The presence of the ribs constitutes a receptacle for dirt, and makes cleaning of the floor difficult.

The object of the present invention is to provide and protect a partially glaze-decorated sandstone tile which is perfectly flat, and is substantially insensitive to wear which would influence its appearance.

Essentially, the tile according to the invention comprises a decoration which remains unchanged with time, even when worn locally.

This is attained according to the invention by providing, in the tile, recessed zones which are completely filled with glaze, this latter thus being in line with the upper surface of the tile.

According to the invention, the lateral generating walls of the recessed zones are substantially vertical to an extent compatible with the mould stripping requirements.

In this manner, even if wear is present, the plan design of the recessed zone does not vary, the tile appearance thus remaining unchanged.

The recessed zones preferably have a substantial depth, for example from 0.5 to 1.5 mm, and a width which can be chosen freely but is preferably kept to a size not exceeding 2 to 10 times the depth.

When the bas-relief surface of the tile has been formed by moulding in the usual manner, the tile recessed zones are filled with coloured glaze by a silk-screen or similar procedure.

In the case of the silk-screen procedure, the number of screens used which reproduce part of the recessed zones is equal to the number of colours of the final decoration which is to be obtained.

Before inserting the glaze in the case of particularly extensive decorations, it can be advisable to spray on to the tile surface a thin layer of intermediate vitreous material to act as a binder between the support and glaze, these latter having very different compositions.

As an alternative to the silk-screen method, the recessed zones can also be filled by spray or other mechanical means, the upper surface of the tiles then being shaved in order to remove the excess material and expose the support.

The merits and functional and constructional characteristics of the invention will be more apparent from the detailed description given hereinafter with reference to the figures of the accompanying drawings, which illustrate by way of nonlimiting example a tile constructed according to the invention.

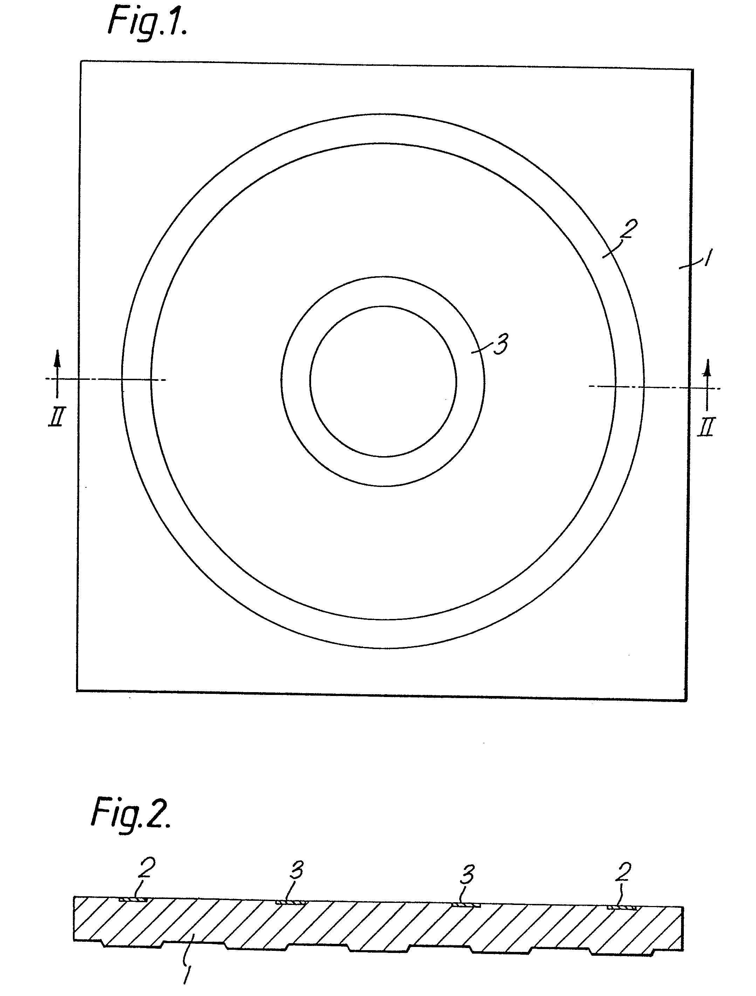

Figure 1 is a plan view of the tile.

Figure 2 is a section on the line II-II of Figure 1.

The figures show a normal square tile 1 of white sandstone, red sandstone or hard fired clay which comprises two concentric grooves 2 and 3 having a depth of 1.00 mm and a width of 7 mm.

During a first passage through the silk-screen machine, a first screen which exactly reproduces the plan design of the inner groove 3 perfectly fills this latter with coloured glaze.

During a second passage, a second screen which reproduces the design of the outer groove 2 fills it completely with glaze of a different colour.

A tile decorated with two concentric circles of different colour is thus obtained at the end of the next kiln firing stage.

It is apparent that if the circles are to be of the same colour, a single screen reproducing both of them is sufficient for applying the glaze.

Because of the substantial parallelism of the lateral generating walls of the concentric cavities, any wear on the tread surface does not change the appearance of the decoration.

A product is thus obtained which combines the particular wear-resistant advantages of red sandstone, white sandstone and like materials with a variety of appearance and improved resistance in use.

This is all attained by virtue of the perfect planarity of the tile, which ensures extreme ease of cleaning, and the fact that wear does not change the contours of the decorative design which appears on the tile surface.

The invention is not limited to the particular embodiment illustrated heretofore, which can be modified at will within the range of the following claims.

PATENT CLAIMS

1. A partially glaze-decorated tile with the decorations embedded therein, as heretofore described, characterised by comprising, on its exposed surface, recessed zones which reproduce the decoration to be obtained and are completely filled with glaze as far as the level of the exposed surface of the tile.

2. A tile as claimed in claim 1, characterised in that the lateral generating walls of the recessed zones are substantially vertical and parallel, and have the minimum divergence compatible with mould stripping requirements.

3. A tile as claimed in claim 1, characterised in that the recessed zones have a depth of between 0.5 and 1.5 mm.

4. A tile as claimed in claim 1, characterised in that the recessed zones have a width of between 2 and 10 times their depth.

*Fig.1.*

*Fig.2.*

**European Patent Office**

## EUROPEAN SEARCH REPORT

Application number

EP 82 20 0554

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. 3) |
| Y | FR-A- 402 213 (A.L.P. CHASLES) <br> * Abstract 1,2 * <br> --- | 1 | C 04 B 41/02 <br> B 44 C 1/26 <br> E 04 F 15/08 |
| Y | CH-A- 344 203 (A. CORTELEZZI) <br> * Page 2, lines 1-9 * <br> --- | 1 | |
| A | GB-A- 455 470 (A.E. BRAY) <br> --- | | |
| A | DE-C- 502 401 (F.E. TREIBS) <br> --- | | |
| A | DE-C- 424 444 (E. PETER) <br> ----- | | |
| | | | **TECHNICAL FIELDS SEARCHED (Int. Cl. 3)** |
| | | | C 04 B 41/00 <br> B 44 C 1/00 <br> E 04 F 11/00 <br> E 04 F 15/00 <br> B 28 B 11/00 |

The present search report has been drawn up for all claims

| Place of search | Date of completion of the search | Examiner |
|---|---|---|
| THE HAGUE | 26-08-1982 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82